# EUROPÄISCHE PATENTSCHRIFT

(11) **EP 1 287 630 B1**
(45) Veröffentlichungstag und Bekanntmachung des Hinweises auf die Patenterteilung: **29.07.2009**
(21) Anmeldenummer: 01943046.1
(22) Anmeldetag: 09.05.2001
(51) Int. Cl.: H04J 3/06, H04H 20/00, H04H 20/65, H04H 20/77

(54) **VERFAHREN ZUR KORREKTUR VON TAKTABWEICHUNGEN BEI AUDIODATEN**
METHOD FOR CORRECTING THE CLOCK-PULSE DEVIATIONS OF AUDIO DATA
PROCEDE DE CORRECTION D'ECARTS DE FREQUENCE DE DONNEES AUDIO

(30) Priorität: 27.05.2000 DE 10026488
(43) Veröffentlichungstag der Anmeldung: 05.03.2003
(73) Patentinhaber: ROBERT BOSCH GMBH, 70442 Stuttgart (DE)
(72) Erfinder: ENGELSBERG, Andreas, 31141 Hildesheim (DE); MITTENDORF, Christian, 31137 Hildesheim (DE); MLASKO, Torsten, 31141 Hildesheim (DE)
(86) Internationale Anmeldenummer: PCT/DE2001/001766
(87) Internationale Veröffentlichungsnummer: WO 2001/093490

(56) Entgegenhaltungen:
- EP-A- 0 401 562
- EP-A- 0 497 115
- EP-A- 0 743 773
- EP-A- 0 797 325
- WO-A-01/18790
- WO-A-99/59279
- US-A- 5 864 793

## Beschreibung

Die Erfindung geht aus von einem Verfahren zur Korrektur von Taktabweichungen bei Audiodaten nach der Gattung des unabhängigen Patentanspruchs.

### Stand der Technik

Es ist bereits bekannt, dass bei der Umsetzung von Audiodaten, die in einer Vorrichtung verarbeitet werden, wobei die Vorrichtung mit unterschiedlichen Takten arbeitet, von einem ersten Takt auf einen zweiten Takt ein Speicherüberlauf bzw. -unterlauf vorkommen kann. Dies ist insbesondere dann der Fall, wenn abgetastete Audiodaten mit der Abtastfrequenz auf einen Takt eines Datenbusses, also einen Bustakt, umgesetzt werden sollen.

Die Abtastfrequenz und der Bustakt sollten korreliert sein, so dass dann mittels Teiler, Oszillatoren oder Taktgeber ein Ableiten des Takts aus einer Quelle vorliegt. Tritt nun Speicherüber- oder unterlauf bei den Audiodaten auf, ist eine Korrektur der Audiodaten erforderlich. In vorgegebenen Zeitabständen werden Audiodaten eingefügt oder gelöscht. Werden Audiodaten eingefügt, dann wird dies durch Wiederholung des vorangegangenen Audiodatums oder des nachfolgenden Audiodatums erreicht. Beim Löschen werden beispielsweise die letzten überzähligen Audiodaten in einem Puffer gelöscht.

Aus EP 497 115 A2 ist ein Rundfunkempfänger mit einer Einrichtung zum vorübergehenden Umschalten von einer empfangenen Frequenz auf eine andere Frequenz bekannt, wobei während des vorübergehenden Umschaltens für unterbrochene Audiosignale Ersatzsignale eingesetzt werden. Die Ersatzsignale werden aus den Audiosignalen vor und gegebenenfalls auch nach der vorübergehenden Umschaltung gebildet.

Aus EP 743 773 A2 ist es bekannt, ein Sprachsignal von einem Synthesefilter derart zu verändern, dass ein Einfügen oder Weglassen von Sprachinformationen durchgeführt wird. Dies sollte vorzugsweise in stimmlosen Bereichen oder in Pausen geschehen. Das Einfügen geschieht durch Rahmenwiederholung bzw. Samplewiederholung.

Aus WO-A 99/59 279 ist es bekannt, bei einer Überabtastung eines eingehenden Datenstroms durch Auswertung eines Inputpuffers zu detektieren, ob Audiodaten eingefügt bzw. gelöscht werden müssen. Der Ort innerhalb eines Rahmens, in dem die Audiodaten eingefügt oder entfernt werden, kann frei gewählt werden.

### Vorteile der Erfindung

Das erfindungsgemäße Verfahren zur Korrektur von Taktabweichungen bei Audiodaten mit den Merkmalen des unabhängigen Patentanspruchs hat demgegenüber den Vorteil, dass die Audiodaten zu bestimmten Zeitpunkten korrigiert werden. Damit ist es vorteilhafterweise möglich, auf den Signalverlauf der Audiodaten einzugehen und die Korrekturen der Audiodaten derart vorzunehmen, dass hörbare Störungen vermieden werden. Damit werden insbesondere Knackgeräusche vermieden, die auftreten würden, falls Audiodaten in energiereichen Signalabschnitten eingefügt werden würden. Daher wird durch das erfindungsgemäße Verfahren die Audioqualität stark erhöht, ohne den Rechenaufwand und den Speicherbedarf dabei stark zu erhöhen. Dies trifft auch auf das Löschen von Audiodaten zu, denn durch das erfindungsgemäße Verfahren wird es vermieden, dass Audiodaten aus sehr energiereichen Signalabschnitten gelöscht werden, was drastisch die Audioqualität je nach Bedeutung der gelöschten Audiodaten verschlechtern könnte.

Es ist vorteilhaft, dass einzufügende Audiodaten durch Wiederholung von Audiodaten bestimmt werden, die neben den eingefügten Audiodaten plaziert sind. Damit werden die einzufügenden Audiodaten in einfachster Weise erzeugt und eine Korrelation zu den benachbarten Audiodaten ist erreicht. Damit fügen sich die einzufügenden Daten in den Signalverlauf der Audiodaten optimal ein. Dadurch werden akustisch wahrnehmbare Störungen vermieden.

Es ist von Vorteil, dass einzufügende Daten durch Interpolation berechnet werden. Dabei ist dies von Vorteil, wenn dabei die benachbarten Audiodaten zur Interpolation verwendet werden. Damit wird eine optimale Anpassung der einzufügenden Audiodaten an den Signalverlauf der Audiodaten erreicht.

Darüber hinaus ist es von Vorteil, dass, wenn Audiodaten gelöscht werden, die benachbarten Audiodaten des zu löschenden Audiodatums durch Interpolation verändert werden, um den Verlust des Audiodatums optimal auszugleichen. Dabei können beliebige Interpolationstechniken, die dann jeweils besonders geeignet sind, verwendet werden, um einen Kompromiß zwischen Rechenaufwand und Kompensation des zu löschenden Audiodatums zu erreichen. Dies betrifft insbesondere Interpolationstechniken höherer Ordnung, die besser geeignet sein können, einen Signalverlauf nachzubilden.

Es ist weiterhin von Vorteil, dass als die bestimmten Zeitpunkte, zu denen die Audiodaten korrigiert werden, Pausen detektiert werden, da hier vorteilhafterweise das Einfügen bzw. Löschen von Audiodaten den geringsten Effekt bewirkt, denn die Audiodaten in Sprachpausen weisen selbst Audiosignale auf, die akustisch kaum wahrnehmbar sind. Damit wird ein Einfügen oder Löschen von solchen Audiodaten zu keinen akustisch störenden Effekten führen. Vorteilhafterweise wird dabei im Audiodatenstrom für eine vorgegebene Zeitspanne ein Energieminimum in den Audiodaten gesucht, in welchem die Korrektur vorgenommen wird.

Durch die in den abhängigen Ansprüchen aufgeführten Maßnahmen und Weiterbildungen sind vorteilhafte Verbesserungen des im unabhängigen Patentanspruch angegebenen Verfahrens zur Korrektur von Taktabweichungen bei Audiodaten möglich.

Darüber hinaus ist es von Vorteil, dass in einer Weiterbildung für die Detektion der Pausen die Rahmenenergien für eine vorgegebene Zeitspanne, das ist eine vorgegebene Anzahl von Rahmen, berechnet werden und dass dabei das Energieminimum als Pause definiert wird, um dann diese Pause mit der Energie des aktuellen Rahmens zu vergleichen, wobei dann eine Differenz mit der Energie der Pause und der des aktuellen Rahmens gebildet wird und diese Differenz wiederum mit einem Schwellwert verglichen wird. Damit wird in optimaler Weise eine Pause bestimmt und mittels eines Schwellwerts werden vorgegebene Abweichungen von diesem Energieminimum auch als Pause erkannt. Durch eine permanente Neuberechnung der Rahmenenergien für eine vorgegebene Zeitspanne wird das Energieminium, mit dem die Pause definiert wird, dauernd an den aktuellen Datenstrom der Audiodaten angeglichen. Damit wird eine Adaption der Pausenenergie erreicht. Dies ist beispielsweise dann von Vorteil, wenn sehr laute oder sehr leise Musik wiedergegeben wird, denn das erfindungsgemäße Verfahren ist dennoch in der Lage, Pausen zu finden, um eine Korrektur der Audiodaten zu den Zeitpunkten vorzunehmen, wodurch eine wahrnehmbare Störung der Wiedergabe minimiert wird.

Weiterhin ist es von Vorteil, dass vor der Detektion der Pausen ein Gleichanteil von den Audiodaten entfernt wird. Damit wird vorteilhafterweise erreicht, dass ein Gleichanteil die Bestimmung der Pausen nicht verfälscht.

Schließlich ist es auch von Vorteil, dass ein Rundfunkempfäng zur Durchführung des erfindungsgemäßen Verfahrens vorliegt.

### Zeichnung

Ausführungsbeispiele der Erfindung sind in der Zeichnung dargestellt und werden in der nachfolgenden Beschreibung näher erläutert. Es zeigt Figur 1 eine Vorrichtung zur Durchführung des erfindungsgemäßen Verfahrens, Figur 2 ein erstes Flußdiagramm des erfindungsgemäßen Verfahrens und Figur 3 ein zweites Flußdiagramm des erfindungsgemäßen Verfahrens.

### Beschreibung

In verschiedenen Geräten, wie Kommunikationsendgeräten und dabei insbesondere Rundfunkempfängern, müssen Audiodaten von einem ersten Takt auf einen zweiten Takt eines Multimediabusses oder Datenbusses umgesetzt werden. Der Datenbus wird verwendet, um verschiedene Komponenten eines Multimediasystems, beispielsweise in einem Kraftfahrzeug, miteinander zu verbinden. Beispielsweise rührt dabei der erste Takt von einer Abtastrate von empfangenen digitalen Rundfunksignalen her. Bei dieser Taktanpassung kommt es zu Taktabweichungen, so dass entweder zuviel oder zuwenig Audiodaten vorliegen. Daher ist entweder ein Einfügen oder ein Löschen von Audiodaten notwendig. Diese hinzugefügten oder gelöschten Audiodaten sollen aber zu keinen subjektiv wahrnehmbaren Audiostörungen führen. Das Hinzufügen bzw. Löschen der Audiodaten muß daher so durchgeführt werden, dass eine Verschleierung der Korrektur der Audiodaten vorliegt. Dies wird erfindungsgemäß zu bestimmten Zeitpunkten und mittels einer Anpassung der hinzugefügten oder gelöschten Audiodaten an die Audiodatensignalverläufe vorgenommen. Insbesondere die Detektion von Pausen in den Audiodaten ist geeignet, um die Zeitpunkte zu ermitteln, wann eine Korrektur der Audiodaten vorgenommen werden soll, wobei dies vor allem durch eine Auswertung von Rahmenenergien erreicht wird. Pausen sind hier die Zeitpunkte in den Audiodaten, wo minimale Energie vorliegt.

Ein Rahmen entspricht hier einer bestimmten Anzahl von Abtastwerten. Die Anzahl der Abtastwerte wird durch die Anwendung bestimmt, beispielsweise durch die Anzahl der Verarbeitungsblöcke eines Audiodekoders. D.h. ein solcher Rahmen entspricht in der Größe nicht notwendigerweise einem Rahmen, mit dem die Audiodaten übertragen werden.

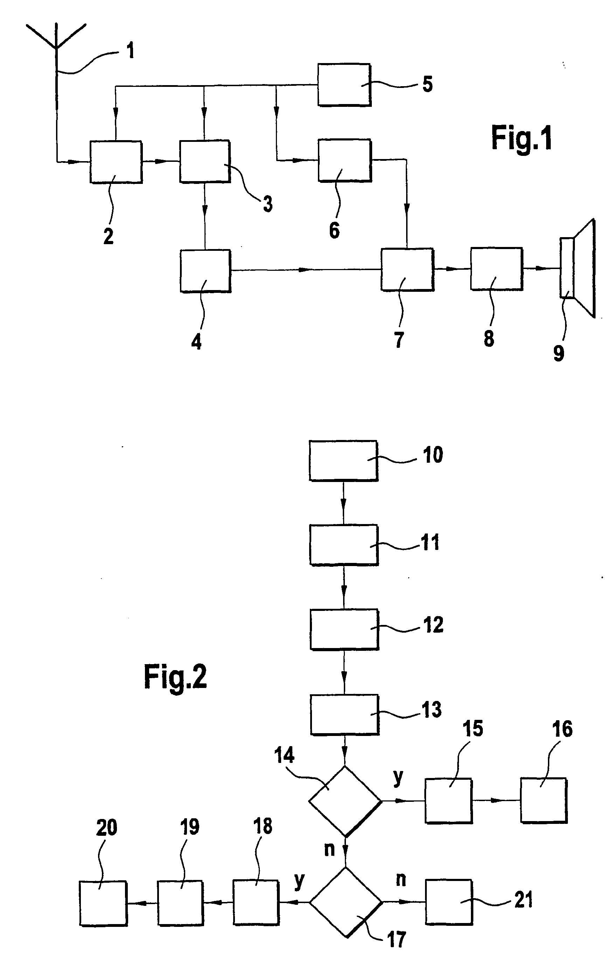

Figur 1 zeigt ein Blockschaltbild einer Vorrichtung zur Durchführung des erfindungsgemäßen Verfahrens. Hier ist es ein Rundfunkempfänger, der beispielsweise für digitale Rundfunkübertragungsverfahren wie DAB (Digital Audio Broadcasting), DVB (Digital Video Broadcasting) oder DRM (Digital Radio Mondial) geeignet ist. Diese digitalen Rundfunkübertragungsverfahren übertragen die digitalen Daten in Rahmen und sind insbesondere für den mobilen Empfang ausgelegt.

Eine Antenne 1 ist an einen Eingang eines Hochfrequenzempfängers 2 angeschlossen. An einen zweiten Eingang des Hochfrequenzempfängers 2 ist ein Oszillator 5 angeschlossen. Ein Ausgang des Hochfrequenzempfängers 2 führt zu einem Digitalteil 3. An einen zweiten Dateneingang des Digitalteils 3 ist der Oszillator 5 angeschlossen. Ein Datenausgang des Digitalteils 3 ist an einen Puffer 4 angeschlossen. Ein Datenausgang des Puffers 4 führt an einen ersten Dateneingang eines Datenbusses 7. Ein Dateneingang eines Taktteilers 6 ist an den Datenausgang des Oszillators 5 angeschlossen. An einen zweiten Dateneingang des Datenbusses 7 ist der Datenausgang des Taktteilers 6 angeschlossen. Der Datenausgang des Datenbusses 7 ist an einen Digital-/Analog-Wandler 8 angeschlossen. Ein Ausgang des Digital-/Analog-Wandlers 8 ist an einen Lautsprecher 9 mit Audioverstärker angeschlossen.

Die digitalen Rundfunksignale werden mittels der Antenne 1 empfangen, um dann im Hochfrequenzempfänger 2 verstärkt, gefiltert und in eine Zwischenfrequenz umgesetzt zu werden.

Die so empfangenen Rundfunksignale werden vom Digitalteil 3 digitalisiert und dekodiert. Dabei kommen eine Kanaldekodierung und eine Quellendekodierung zum Einsatz. Kanalkodierung ist ein Verfahren, um zu übertragenden Daten ein Fehlerschutz hinzuzufügen, mittels dessen im Empfänger fehlerhafte, empfangene Signale wieder rekonstruiert werden können (Kanaldekodierung). Quellenkodierung führt zu einer Verringerung der zu übertragenden Daten, wobei dann im Empfänger mittels vorgegebener Regeln den reduzierten Daten wieder Daten hinzugefügt werden (Quellendekodierung).

Die dekodierten Audiosignale werden dann im Digitalteil 3 in Bezug auf die.Taktabweichung mit dem erfindungsgemäßen Verfahren korrigiert. Die so korrigierten Audiosignale werden in den Puffer 4 geschrieben, um dann auf den Datenbus 7 mit dem Takt des Datenbusses 7 geschaltet zu werden. Von dem Datenbus 7 werden die Audiosignale an den Digital-/Analog-Wandler 8 übertragen, der die Audiosignale in analoge Audiosignale umwandelt. Die analogen Audiosignale werden dann vom Audioverstärker des Lautsprechers 9 verstärkt, um dann mittels des Lautsprechers 9 wiedergegeben zu werden.

Anstatt eines Rundfunkempfängers wie in Figur 1 dargestellt, ist das erfindungsgemäße Verfahren zur Korrektur von Taktabweichungen bei Audiodaten auch in anderen Kommunikationsendgeräten möglich. Das sind Empfangsgeräte für den Heimempfang, Telefone oder Bildtelefone.

In Figur 2 ist das erfindungsgemäße Verfahren in einem ersten Flußdiagramm dargestellt. Das erfindungsgemäße Verfahren läuft auf dem Rundfunkempfänger, der in Fig. 1 dargestellt ist. In Verfahrensschritt 10 werden die digitalen Rundfunksignale empfangen. Dies geschieht, wie oben dargestellt, mittels der Antenne 1 und des Hochfrequenzempfängers 2. Im Verfahrensschritt 11 werden die empfangenen Rundfunksignale in Digitalsignale umgewandelt, um dann in Verfahrensschritt 12 in Bezug auf die Kanalkodierung und die Quellenkodierung dekodiert zu werden. Kanalkodierung bedeutet, dass zu übertragenden Daten Redundanz hinzugefügt wird, so dass sie im Empfänger mittels dieser Redundanz im Falle von falsch detektierten Daten wieder hergestellt werden können. Quellenkodierung bedeutet, dass aus den zu übertragenden Daten Irrelevanz entfernt wird.

In Verfahrensschritt 13 wird dann untersucht, ob die Audiodaten Sprachpausen aufweisen. Hier werden Sprachpausen danach erkannt, ob die Energie in einem vorgegebenen Zeitabschnitt unter einer vorgegebenen Schwelle liegt. Diese Schwelle ist vorgegeben und, um die Messung nicht zu verfälschen, wird daher vor der Sprachpausendetektion ein eventueller Gleichanteil von den Audiodaten entfernt. In Verfahrensschritt 14 wird überprüft, ob eine Pause vorliegt oder nicht. Ist das der Fall, dann werden in Verfahrensschritt 15 Audiodaten eingefügt oder gelöscht, je nach dem, wie die Taktabweichung zwischen dem Takt der Audiodaten und dem Bustakt ist. Werden Audiodaten eingefügt und zwar an den Stellen der Pausen, dann werden die Audiodaten, die eingefügt werden sollen, dadurch erzeugt, dass sie als Kopie der vorhergehenden oder nachfolgenden Audiodaten erzeugt werden.

In einer Weiterbildung ist es alternativ möglich, dass die einzufügenden Audiodaten aus den benachbarten Audiodaten mittels Interpolation erzeugt werden. Dabei kann eine lineare Interpolation, also ein Mittelwert erster Ordnung, oder auch eine Interpolation beliebiger Ordnung angewendet werden, um die einzufügenden Audiodaten an den bestehenden Audiodatenstrom optimal im Hinblick auf den Signalverlauf anzupassen.

Sind jedoch Audiodaten zu löschen, dann wird das entsprechende Audiodatum aus dem Audiodatenstrom entfernt oder in einer Weiterbildung werden die das zu löschende Audiodatum umgebenden Audiodaten durch Interpolation derart verändert, dass das Fehlen des gelöschten Audiodatums optimal maskiert wird. Auch hier ist eine lineare Interpolation, im allgemeinen als Dezimation bekannt, möglich, oder aber es werden wieder Interpolationen höherer Ordnung verwendet, um eine optimale Übergangssituation zwischen den nun benachbarten Audiodaten festzustellen.

In Verfahrensschritt 16 werden dann die Audiodaten gepuffert und auf den Datenbus geschaltet. Wurde in Verfahrensschritt 14 festgestellt, dass keine Pause detektiert wurde, dann wird in Verfahrensschritt 17 überprüft, ob seit einer vorgegebenen Anzahl von Rahmen keine Pause detektiert wurde. Ist das nicht der Fall, dann werden in Verfahrensschritt 21 die vorliegenden Audiodaten gepuffert und dann auf den Datenbus geschaltet. Sind jedoch seit dieser vorgegebenen Anzahl keine Pausen detektiert worden, dann wird in Verfahrensschritt 18 in den vorliegenden Audiodaten ein Energieminimum gesucht, um die Korrektur dann in Verfahrensschritt 19 zum Zeitpunkt dieses Energieminimums, das als Ersatz für die Pause verwendet wird, durchzuführen. In Verfahrensschritt 20 werden dann die Daten gepuffert und auf den Datenbus geschaltet. Der Sinn des erfindungsgemäßen Verfahrens ist, dass die Korrektur der Audiodaten mit dem geringsten hörbaren Einfluß vorgenommen wird.

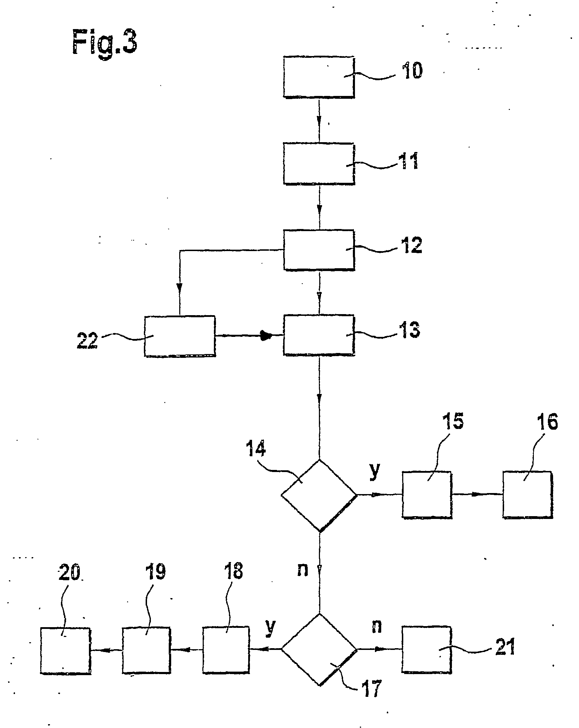

In Figur 3 ist ein zweites Flußdiagramm des erfindungsgemäßen Verfahrens zu Korrektur von Taktabweichungen bei Audiodaten dargestellt. Das Flußdiagramm aus Figur 1 wurde hier um eine adaptive Pausendetektion ergänzt.

In Verfahrensschritt 10 werden die digitalen Rundfunksignale empfangen und in Verfahrensschritt 11 digitalisiert. In Verfahrensschritt 12 wird die Kanaldekodierung und die Quellendekodierung vorgenommen, so dass dann vom dekodierten Audiorahmen in Verfahrensschritt 22 die Energie bestimmt wird und diese zusammen mit den vorangegangenen Energiewerten einer vorgegebenen Zeitspanne in einem Speicher des Digitalteils 3 abgelegt werden und von diesen Werten dann das Energieminimum bestimmt wird.

Dieses Energieminimum wird als die Pause definiert. Um dieses Energieminimum wird ein Schwellwert gelegt, so dass auch ein Energiewert des aktuellen Rahmens, der sehr nahe bei diesem Energieminimum liegt, als Pause identifiziert wird. In Verfahrensschritt 13 werden dann die vorliegenden Audiodaten im Hinblick auf vorliegende Pausen mit dem Wert für das Energieminimum untersucht. Da dieses Energieminimum dauernd aus den vergangenen Audiodaten berechnet wird, wird der Wert für die Pausen dauernd an die aktuellen Audiodaten angepasst, es liegt also eine Adaption vor. Wiederum wird jedoch in Verfahrensschritt 12, bevor eine Pausendetekion vorliegt, der Gleichanteil von den Audiodaten entfernt.

In Verfahrensschritt 13 werden dann die Pausen detektiert. In Verfahrensschritt 14 wird erneut überprüft, ob Pausen vorliegen oder nicht. Ist das der Fall, dann wird in Verfahrensschritt 15 eine notwendige Korrektur der Audiodaten vorgenommen, um dann in Verfahrensschritt 16 die Audiodaten zu puffern und auf den Datenbus 7 zu schalten. In Verfahrensschritt 17 wird überprüft, ob keine Pausen seit einer vorgegebenen Anzahl von Rahmen detektiert wurden, falls in Verfahrensschritt 14 erkannt wurde, dass keine Pause detektiert wurde.

Wurde in Verfahrensschritt 17 festgestellt, dass dies nicht der Fall ist, dann wird in Verfahrensschritt 21 der vorliegende Audiodatenstrom gepuffert und auf den Datenbus geschaltet. Sind jedoch seit der vorgegebenen Anzahl von Rahmen keine Pausen detektiert worden, dann wird in Verfahrensschritt 18 ein Energieminimum in den vorliegenden Audiodaten gesucht, um dies dann als Pause zu definieren. Die Audiodaten werden dann zum Zeitpunkt dieses Energieminimums korrigiert. In Verfahrensschritt 20 werden die korrigierten Audiodaten gepuffert und auf den Datenbus geschaltet.

Die Verfahrensschritte, die die Identifikation der Pausen und die Korrektur der Pausen betreffen, können alternativ auch an den gepufferten Daten vorgenommen werden. Dann ist der Audiodatenpuffer 4 mit einem Prozessor verbunden, der dann an den gepufferten Audiodaten das erfindungsgemäße Verfahren, wie es in Fig. 2 und Fig. 3 dargestellt wurde, durchführt.

## Patentansprüche

1. Verfahren zur Korrektur von Taktabweichungen bei Audiodaten im Zeitbereich, **dadurch gekennzeichnet, dass** die Audiodaten von einem ersten Takt, der von einer Abtastrate von empfangenen digitalen Rundfunksignalen herrührt, auf einen zweiten Takt umgesetzt werden, dass die Audiodaten in Rahmen im ersten Takt zwischengespeichert werden, dass die zwischengespeicherten Audiodaten auf einen Datenbus im zweiten Takt geschaltet werden, wobei bei einer Taktabweichung zwischen dem ersten und dem zweiten Takt die Audiodaten korrigiert werden, indem Audiodaten eingefügt werden, die aus den zwischengespeicherten Audiodaten bestimmt werden, falls zu wenige Audiodaten vorliegen und, indem Audiodaten gelöscht werden, falls zu viele Audiodaten vorliegen, dass bestimmte Zeitpunkte in Abhängigkeit von einem Signalverlauf der Audiodaten ermittelt werden, wann die zwischengespeicherten Audiodaten korrigiert werden, dass die zwischengespeicherten Audiodaten, die benachbart zu den zu löschenden Audiodaten sind, interpoliert werden, dass in den Audiodaten Pausen, als die bestimmten Zeitpunkte detektiert werden, dass in den Pausen die Audiodaten korrigiert werden, dass wenn nach einer vorgegebenen Zahl von Rahmen keine Pausen gefunden wurden, ein Energieminimum in dem aktuellen Rahmen berechnet wird und an der Position des Energieminimums die Audiodaten korrigiert werden.

2. Verfahren nach Anspruch 1, **dadurch gekennzeichnet, dass** für die Detektion der Pausen die Rahmenenergien für eine vorgegebene Zeitspanne berechnet werden, dass das Energieminimum als Pause definiert wird und dass die Energie des aktuellen Rahmens mit dem Energieminimum verglichen wird, indem eine Differenz gebildet wird und die Differenz mit einem vorgegebenen Schwellwert verglichen wird.

3. Verfahren nach Anspruch 1 oder 2, **dadurch gekennzeichnet, dass** vor der Detektion der Pausen ein Gleichanteil von den Audiodaten entfernt wird.

4. Verwendung eines Rundfunkempfängers zur Durchführung des Verfahrens nach den Ansprüchen 1 bis 3.

## Claims

1. Method for correcting clock discrepancies for audio data in the time domain, **characterized in that** the audio data are converted from a first clock cycle, which stems from a sampling rate for received digital broadcast radio signals, to a second clock cycle, **in that** the audio data are buffer-stored in frames in the first clock cycle, **in that** the buffer-stored audio data are connected to a data bus in the second clock cycle, wherein a clock discrepancy between the first and the second clock cycle prompts the audio data to be corrected by inserting audio data, which are determined from the buffer-stored audio data, if there are too few audio data items and by deleting audio data if there are too many audio data items, **in that** a signal profile for the audio data is taken as a basis for ascertaining particular times when the buffer-stored audio data are corrected, **in that** the buffer-stored audio data which are adjacent to the audio data to be deleted are interpolated, **in that** pauses in the audio data are detected as the particular times, **in that** the audio data are corrected in the pauses, and **in that** if no pauses have been found after a prescribed number of frames then an energy minimum in the current frame is calculated and the audio data are corrected at the position of the energy minimum.

2. Method according to Claim 1, **characterized in that** the pauses are detected by calculating the frame energies for a prescribed period, **in that** the energy minimum is defined as a pause and **in that** the energy of the current frame is compared with the energy minimum by forming a difference and comparing the difference with a prescribed threshold value.

3. Method according to Claim 1 or 2, **characterized in that** the detection of the pauses is preceded by a DC component being removed from the audio data.

4. Use of a broadcast radio receiver for carrying out the method according to Claims 1 to 3.

## Revendications

1. Procédé de correction des écarts de cadence temporelle de données audio,
**caractérisé en ce que**
les données audio sont converties d'une première cadence qui découle du taux d'échantillonnage de signaux numériques de diffusion radio reçus en une deuxième cadence,
**en ce que** les données audio sont conservées temporairement en trames de la première cadence,
**en ce que** les données audio conservées temporairement sont converties en la deuxième cadence sur un bus de données,
tandis qu'en cas d'écart de cadence entre la première et la deuxième cadence, les données audio sont corrigées en insérant des données audio déterminées à partir des données audio conservées temporairement en mémoire au cas où les données audio sont trop peu nombreuses et en effaçant les données audio au cas où les données audio sont trop nombreuses,
**en ce que** des instants définis sont déterminés en fonction de l'évolution du signal de données audio lorsque les données audio conservées temporairement en mémoire sont corrigées,
**en ce que** les données audio conservées temporairement en mémoire et voisines des données audio à effacer sont interpolées,
**en ce que** des pauses sont détectées dans les données audio en tant qu'instants définis,
**en ce qu'**au cours des pauses, les données audio sont corrigées et
**en ce que** si aucune pause n'a été découverte après un nombre prédéterminé de trames, un minimum d'énergie de la trame en cours est calculé et les données audio sont corrigées en la position du minimum d'énergie.

2. Procédé selon la revendication 1, **caractérisé en ce que** pour la détection des pauses, les énergies de trame sont calculées pendant un intervalle de temps prédéfini, **en ce que** le minimum d'énergie est défini comme pause et **en ce que** l'énergie de la trame en cours est comparée au minimum d'énergie en formant une différence, la différence étant comparée à une valeur de seuil prédéterminée.

3. Procédé selon les revendications 1 ou 2, **caractérisé en ce que** la partie continue des données audio est éliminée avant la détection des pauses.

4. Utilisation d'un récepteur de diffusion radio en vue de l'exécution du procédé selon les revendications 1 à 3.
